# EUROPEAN PATENT APPLICATION

(11) **EP 1 405 571 A1**
(43) Date of publication of application: **07.04.2004**
(21) Application number: 03077679.3
(22) Date of filing: 27.08.2003
(51) Int. Cl.: A23L 1/16

(54) **Uniform cooking pasta**

(30) Priority: 02.10.2002 US 262743
(71) Applicant: UNILEVER N.V., 3013 AL Rotterdam (NL); UNILEVER PLC, London EC4P 4BQ (GB)
(72) Inventor: Gimelli, Kenneth c/o Lipton, Englewood Cliffs, New Jersey 07632 (US)
(74) Representative: Wurfbain, Gilles L.

(57) **Abstract**

The invention is directed to a pasta composition having a lattice structure with tapered portions. The pasta composition can be of any shape and flavor suitable for human consumption. The pasta composition cooks uniformly and reheats uniformly regardless of the conventional cooking technique used.

## Description

### FIELD OF THE INVENTION

The present invention is directed to a uniform cooking pasta. More particularly, the invention is directed to a pasta composition that cooks uniformly and homogeneously reheats. The pasta composition of the present invention may be used in meals that are prepared, for example, by boiling, steaming or baking, as well as in meals that are prepared in a microwave oven.

### BACKGROUND OF THE INVENTION

Pasta or macaroni dishes (including side dishes and meals) are enjoyed by many consumers; and particularly, because such dishes can be made to taste great in the absence of a high fat content. Unfortunately, it is not always easy to prepare pasta dishes that are evenly or uniformly cooked. Often, pasta, whether steamed in a steamer, baked in an oven, boiled in water or heated in a microwave, is not prepared to perfection because portions of the pasta, after cooking, can be soggy or mushy (i.e., overcooked) while other portions of the pasta can be hard (i.e., undercooked), or prepared to have the perfect texture (i.e., al dente).

The inconsistent characteristics of cooked pasta are typically the result of thick portions of dry pasta dough at interfaces or intersections that make up or form part of the pasta. These thick portions, which prevent uniform heating of the pasta, are not limited to pasta of any particular shape. In fact, pasta having difficult to cook thick portions can be in the form of ziti, shells, elbows, rotini, and the like. Such thick portions may also be found in pasta having conventional lattices, like basic wheel shaped pasta.

It is of increasing interest to develop a pasta composition that cooks uniformly and homogeneously reheats. This invention, therefore, is directed to a uniformly cooking pasta composition that comprises a lattice portion wherein the lattice portion has at least one leg comprising a tapered portion that joins at an intersection within the pasta composition. The pasta composition of this invention can be in the form of many shapes, and unexpectedly, cooks uniformly and homogeneously reheats, regardless of the cooking technique employed.

Efforts have been made for preparing pasta. In U.S. Patent No. 6,428,835, shelf-stable filled pasta is described.

Other efforts have been made for making pasta. In U.S. Patent No. 6,322,840, a tri-dimensional pasta product is described.

Even other efforts have been made for making pasta. In U.S. Patent No. 6,258,392, a microwavable pasta pie and pan assembly is described.

None of the additional information above describes a pasta composition that comprises a lattice portion wherein the lattice portion has at least one leg comprising a tapered portion that joins at an intersection within the pasta composition.

### SUMMARY OF THE INVENTION

In a first aspect, the present invention is directed to a pasta composition comprising:
(a) a lattice wherein the lattice has at least one leg comprising a tapered portion; and
(b) an intersection joined by the tapered portion of the leg.

In a second aspect, the present invention is directed to a dish prepared with the pasta composition of the first aspect of this invention.

Lattice, as used herein, is defined to mean having at least one woven leg.

Tapered, as used herein, includes going from a thick region to a thinner region, gradually or non-gradually, and going from a thick region to a fillet-type region.

Larger is defined to mean having more pasta composition by weight, for example, being heavier and thicker.

Intersection means a portion of pasta contacting another portion of pasta within the pasta composition at a point of contacting such that the point of contacting comprises at least one tapered portion of a leg.

### BRIEF DESCRIPTION OF THE DRAWINGS

The subject matter which is regarded as the invention is particularly pointed out and distinctly claimed in the concluding portion of the specification. The invention, however, may be best understood by reference to the following description taken in conjunction with the accompanying drawing figures in which:
Figure 1 shows a lattice with a leg having a tapered portion; and
Figures 2a and 2b show pasta compositions having the lattice structure of this invention.

### DETAILED DESCRIPTION OF THE INVENTION

There is no limitation with respect to the type of pasta dough that may be used to make the pasta composition of the present invention, as long as the pasta dough is suitable to be extruded from a commercial or domestic pasta making machine. Such pasta dough, therefore, can be used to make a pasta composition which is, for example, an allspice, amaranth, ancient grain, anise, apple cinnamon, apricot, artichoke, asparagus, barley, basic semolina, basil, beet, broccoli, buckwheat, buttermilk, cajun, carrot, cilantro, cinnamon, coconut, corn, corn meal, curry, dill, fennel, garbanzo, garlic, ginger, jalapeno, lemon, lime, mint, mustard, nutmeg, orange, parsley, pepper, pineapple, poppy, potato, pumpkin, red pepper, rice, rosemary, rye, sesame, soy, spinach, tomato, yogurt or zucchini pasta, as well as mixtures thereof and the like.

The pasta dough of the present invention may comprise water, milk, egg, and/or oil. Often, the dough used to make pasta composition of the present invention is at least 65.0%, and preferably, at least 66.5%, and most preferably, at least 67.5% by weight of flour (e.g. semolina flour), but not 100% by weight dry ingredients, with all weight percents being based on total weight of the pasta dough.

When making the pasta composition of the present invention, the ingredients (e.g., flour, water and egg) are mixed to produce a homogeneous dough mixture and then extruded through a commercially available pasta making machine, with the exception that for this invention the dies of the pasta making machine are modified (to produce a leg or legs with a tapered portion) to yield a pasta composition with a lattice as described herein. Subsequent to being extruded, the pasta composition of this invention may be immediately cooked and consumed, or dried (e.g., in an oven or dryer at a temperature of at least about 75°C, but preferably, between about 80°C to about 83°C) and cooked and consumed at a later time.

It is also within the scope of this invention to add to the pasta dough used to make the pasta composition of this invention optional additives like salt, preservatives, cooking enhancers (e.g., glycerol monostearate), food grade colorants, spices, mixtures thereof, and the like. When such optional additives are desired, collectively, they typically make up less than about 5.0% by weight of the total weight of the pasta composition.

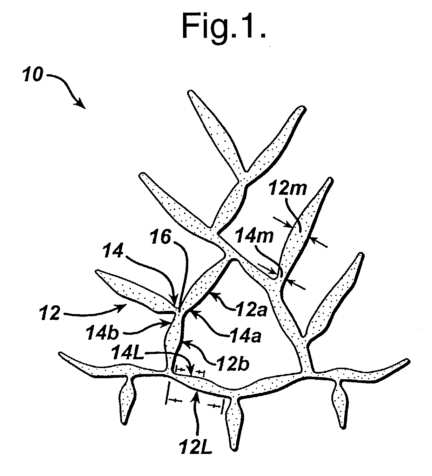

Turning to the figures, Figure 1 shows a pasta lattice portion 10 having at least one leg 12 comprising a tapered portion 14 that intersects another portion of pasta and in this illustration legs 12a and 12b, both of which comprise tapered portions 14a and 14b, respectively that form an intersection 16 joined by tapered portions 14, 14a and 14b of legs 12, 12a, and 12b, respectively. It is particularly noted that the middle portion cross-sectional volume of each leg 12m is at least 2.0% to 25.0%, and preferably, at least 3.0% to 20.0%, and most preferably, at least 8.0% to 12% larger than the middle portion cross-sectional volume of the tapered portion of each leg 14m, and including all ranges subsumed therein. It is further noted that with respect to each leg 12 comprising a tapered portion 14, the length of the tapered portion 14 is typically from 2.5% to 55% the total length of leg 12. Therefore, 14L is 0.025 to 0.55 times the length of 12L.

The lattice portion 10 shown in Figure 1 may be employed in pasta compositions having any shape or form, as long as the same may be consumed by humans. Thus, the pasta compositions of the present invention may be in the form of, for example, animals, letters, numbers, cars, holiday ornaments, instruments, sport items, sport figures, cartoon characters, famous dwellings and famous people. Usually, the legs of the pasta composition of the present invention are from about 0.4 cm to 5.0 cm, including all ranges subsumed therein.

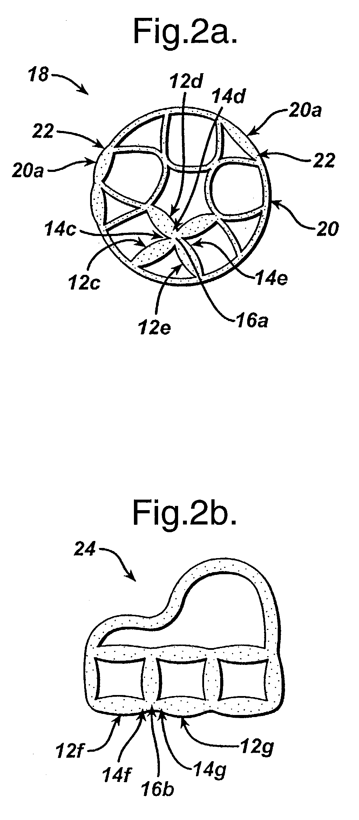

Turning to Figures 2a and 2b, Figure 2a shows a soccer ball 18 comprising the lattice of the present invention. The soccer ball 18 comprises leg 12c having a tapered portion 14c that intersects another portion of pasta and in this illustration legs 12d and 12e, both of which comprise tapered portions 14d and 14e, respectively that form an intersection 16a joined by tapered portions 14c, 14d and 14e of legs 12c, 12d and 12e, respectively. Perimeter 20 surrounds soccer ball 18 and can optionally be one uniform piece of pasta or comprise legs 20a that also have tapered portions 22.

Figure 2b depicts a pasta composition according to this invention in the shape of a piano 24. The piano 24 comprises leg 12f having a tapered portion 14f that intersects, among other places with leg 12g having a tapered portion 14g, at intersection 16b.

There is generally no limitation with respect to the amount of or percent of tapered portion present within the pasta composition of this invention other than that enough tapered portion should be present in the pasta composition in order to achieve uniform cooking characteristics that exceed the characteristics of cooked conventional pasta with conventional (non-tapered) lattices.

Typically, the pasta composition of the present invention has lattice with at least one leg comprising a tapered portion. Preferably, however, at least 50%, and most preferably, at least 90-100% of all legs present within the pasta composition of this invention are tapered at the intersections (i.e., point of contacting) making up the pasta composition.

When cooking the pasta composition of the present invention, the chef or consumer may boil, steam, bake or microwave the pasta composition, utilizing standard cooking techniques. Thus, the pasta composition of the present invention may be ready to serve, for example, in under 30 minutes if boiling water is used as the cooking means and in under 15 minutes if a microwave oven is used as the cooking means.

When preparing a dish (i.e., meal) comprising the pasta composition of the present invention, the pasta composition may be cooked with or added to, for example, previously cooked meats and/or vegetables. In an especially preferred embodiment, however, the pasta composition of the present invention is served in soups or with sauces.

The following examples are provided to facilitate an understanding of the present invention. The examples are not intended to limit the scope of the invention as set forth in the claims.

### Example 1

A basic semolina pasta dough was made by combining the following ingredients and mixing with an electric mixer.

| Ingredient | Weight Percent |
|---|---|
| Extra Fancy Semolina flour | 69.0 |
| Glycerol monostearate | 1.0 |
| Salt | 1.0 |
| Water | 29.0 |

The resulting homogenous semolina pasta dough was extruded through a conventional industrial pasta making machine having a modified triangular die to produce a triangular shaped pasta composition having the lattice of the present invention, with 14L equal to about 0.075 X (12L), 12L being about 2.0 cm, and 12m being about 10% larger than 14m.

### Example 2

About 43 grams of the pasta composition prepared in Example 1 were combined with 4 ounces of water and heated in a microwave oven (at normal power) for about 3.5 minutes. About 43 grams of conventional lattice type pasta (not having the lattice of the present invention) were also combined with 4 ounces of water and heated for about 3.5 minutes in a microwave oven at normal power. The former was fully hydrated and had a consistent bite when eaten wherein the latter had uncooked, non-hydrated hard portions when eaten. The example demonstrates that the superior pasta compositions having the lattice of the present invention unexpectedly heat/cook homogeneously to thereby result in a pasta composition having a consistent bite.

## Claims

1. A pasta composition comprising:
(a) a lattice having at least one leg comprising a tapered portion; and
(b) at least one intersection joined by the tapered portion of the leg.

2. The pasta composition according to claim 1 wherein the leg has a middle portion cross-sectional volume that is 2.0% to 25.0% larger than a middle portion cross-sectional volume of the tapered portion.

3. The pasta composition according to claim 1-2 wherein the leg has a total length and the tapered portion has a total length, the total length of the tapered portion being from 2.5% to 55% of the total length of the leg.

4. The pasta composition according to claim 1-3 wherein the leg comprising a tapered portion is from 0.4 cm to 5.0 cm in length.

5. The pasta composition according to claim 1-4 wherein at least 50% of all legs present within the pasta composition are tapered.

6. The pasta composition according to claim 1-5 wherein at least 90% to 100% of all legs present within the pasta composition are tapered.

7. The pasta composition according to claim 1-6 wherein the pasta composition is prepared from dough that is at least 65% by weight flour.

8. The pasta composition according to claim 1-7 wherein the pasta composition is shaped like an animal, letter, number, car, holiday ornament, instrument, sport item, sport figure, cartoon character, famous dwelling, or famous person.

9. A dish comprising:
a) a pasta composition comprising:
i) a lattice having at least one leg comprising a tapered portion; and
ii) at least one tapered portion joined by the tapered portion of the leg; and
b) a sauce or soup composition suitable to be eaten with the pasta composition.

10. The dish according to claim 9 wherein the dish further comprises meat, vegetables or both.

11. The dish according to claim 9-10 wherein the leg has a middle portion cross-sectional volume that is 2.0% to 25.0% larger than a middle portion cross-sectional volume of the tapered portion.

12. The dish according to claim 9-11 wherein the leg has a total length and the tapered portion has a total length, the total length of the tapered portion being from 2.5% to 55% of the total length of the leg.

13. The dish according to claim 9-12 wherein at least 50% of all legs within the pasta composition are tapered.

14. The dish according to claim 9-13 wherein at least 90% to 100% of all legs within the pasta composition are tapered.

15. The dish according to claim 9-14 wherein the leg comprising a tapered portion is from 0.4 cm to 5.0 cm.
